# EUROPÄISCHE PATENTSCHRIFT

(11) **EP 2 278 180 B1**
(45) Veröffentlichungstag und Bekanntmachung des Hinweises auf die Patenterteilung: **09.09.2015**
(21) Anmeldenummer: 10169642.5
(22) Anmeldetag: 15.07.2010
(51) Int. Cl.: F16C 19/38, F16C 35/063

(54) **Verfahren und Vorrichtung zum axialen Sichern eines Lagerrings**
Method and device for axially securing a bearing ring
Procédé et dispositif de sécurisation axiale d'une bague de palier

(30) Priorität: 21.07.2009 DE 102009034012
(43) Veröffentlichungstag der Anmeldung: 26.01.2011
(73) Patentinhaber: Aktiebolaget SKF, 41 550 Göteborg (SE)
(72) Erfinder: Liesegang, Hans-Jürgen, 26419 Schortens (DE); Seuberling, Mathias, 97631 Bad Königshofen (DE)
(74) Vertreter: Schonecke, Mitja

(56) Entgegenhaltungen:
- DE-A1- 4 137 607
- DE-T2- 69 804 135
- DE-U- 1 929 815
- JP-A- 2006 177 268
- US-A- 4 643 041

## Beschreibung

Die Erfindung betrifft ein Verfahren und eine Vorrichtung zum axialen Sichern eines Lagerrings. Weiterhin betrifft die Erfindung eine Anordnung mit einem Lagerring und einer derartigen Vorrichtung.

Die axiale Position und/oder axiale Vorspannung eines Maschinenelements, das beispielsweise auf einer Welle oder in einer Bohrung angeordnet ist, kann auf unterschiedliche Weise gegen unzulässig starke Änderungen gesichert werden. Beispielsweise kann eine Anschlagvorrichtung axial neben dem Maschinenelement angeordnet werden und mit einer Anschlagfläche axial gegen das Maschinenelement anschlagen und dadurch eine Positionsänderung des Maschinenelements in eine Axialrichtung verhindern. Wenn die Anschlagfläche zudem mit einer Kraft axial gegen das Maschinenelement gepresst wird und ein Ausweichen des Maschinenelements verhindert wird, kann eine axiale Vorspannung des Maschinenelements erzeugt werden.

Aus der DE 41 37 607 A1 ist eine Einrichtung zum Positionieren einer Motorausgangswelle für einen Motor mit einem Schneckenuntersetzungsgetriebe bekannt, bei der in einen hohlen Teil eines Getriebegehäuses eine Füllmasse eingespritzt ist.

Aus der US 4 643 041 A ist eine Anordnung aus einer vorgespannten Kugelmutter und einer Schraube bekannt, die durch Einspritzen eines verflüssigten Harzes zwischen benachbarten Kugelmuttern vorgespannt wird.

Die DE 698 04 135 T2 offenbart einen Getriebemotor zum Antrieb von Autozubehör mit Mitteln zur Beseitigung des Axialspiels seiner Achse.

Bei kleinen Maschinenelementen mit Abmessungen im Bereich von wenigen Zentimetern erfolgt die axiale Sicherung in der Regel im Rahmen einer automatisierten Montage unter Verwendung von Standardbauteilen. Bei sehr großen Maschinenelementen können die absoluten Toleranzen insbesondere der Einbauumgebung allerdings so große Werte annehmen, dass zur Ausbildung einer axialen Sicherung mit definierten Eigenschaften eine individuelle Justage oder Anpassung erforderlich sein kann.

In diesem Zusammenhang ist es beispielsweise bereits bekannt, ein Großlager durch ein axiales Verspannen zwischen einer Wellenschulter und einem Spannring auf einer Welle zu fixieren. Zum Ausgleich von Toleranzen wird ein individuell angepasster Zwischenring axial zwischen dem Großlager und dem Spannring angeordnet. Die individuelle Anfertigung des Zwischenrings bzw. die Auswahl eines passenden Zwischenrings aus einem Sortiment von Zwischenringen erfordert allerdings einen zusätzlichen Aufwand. Diese Methode kann beispielsweise bei der Montage eines Lagers einer Rotorwelle einer Windenergieanlage zum Einsatz kommen, das zu einer Axialseite hin gegen eine Wellenschulter anschlägt und zur anderen Axialseite hin durch einen Spannring gesichert ist, der axial gegen eine weitere Wellenschulter oder eine axiale Endfläche der Welle anschlägt und mit der Welle verschraubt ist. Auch wenn diese Vorgehensweise zu brauchbaren Resultaten führt, besteht wegen des relativ großen Aufwands Bedarf für alternative Lösungen.

Prinzipiell besteht auch die Möglichkeit den Spannring mit einer hohen radialen Überdeckung auf die Welle aufzupressen und dabei soweit axial zu verschieben, bis er die ihm zugedachte Position erreicht hat. Dies kann beispielsweise mittels einer Hydraulikmutter durchgeführt werden, mit der sich sowohl die benötigte Kraft als auch die benötigte Präzision erzielen lässt. So ist beispielsweise aus der EP 0 878 271 A2 eine Hydraulikmutter zur Montage eines Ringkörpers auf einer Welle und zur Demontage eines Ringkörpers von einer Welle bekannt. Die Hydraulikmutter weist einen ringförmigen Kolben auf, der in einer ringförmigen Vertiefung angeordnet ist und mit der Vertiefung eine Druckkammer ausbildet. Um den Ringkörper axial zu verschieben wird die Druckkammer mit Hydraulikflüssigkeit gefüllt und dadurch der Kolben nach außen gedrückt.

Die für eine zuverlässige Fixierung ohne Verschraubung erforderliche hohe radiale Überdeckung führt allerdings dazu, dass relativ große Kräfte auftreten können, so dass bei einer derartigen Vorgehensweise das Risiko einer Beschädigung der Welle und des Spannrings besteht.

Der Erfindung liegt die Aufgabe zugrunde, eine zuverlässige und möglichst genau definierte axiale Fixierung eines Lagerrings auf effiziente Weise zu ermöglichen.

Diese Aufgabe wird durch ein Verfahren gemäß Anspruch 1 und eine Spannvorrichtung mit der Merkmalskombination des Anspruchs 7 gelöst.

Beim erfindungsgemäßen Verfahren zum axialen Sichern eines Lagerrings wird eine axiale Anschlagfläche mittels einer druckbeaufschlagten Flüssigkeit axial gegen den Lagerring gepresst und dadurch der Lagerring in einer gewünschten axialen Position fixiert und/oder eine gewünschte axiale Vorspannung des Lagerrings eingestellt. Die axiale Anschlagfläche wird durch Erstarren der Flüssigkeit fixiert und dadurch wird die eingestellte Position und/oder Vorspannung des Lagerrings konserviert.

Die Erfindung hat den Vorteil, dass mit relativ geringem Aufwand eine zuverlässige axiale Fixierung eines Lagerrings möglich ist. Ein weiterer Vorteil besteht darin, dass die Eigenschaften der axialen Sicherung präzise eingestellt werden können. Beispielsweise kann über die Höhe des Drucks, dem die Flüssigkeit ausgesetzt wird, eine gewünschte axiale Vorspannung des Lagerrings präzise eingestellt werden.

Insbesondere kann mit dem erfindungsgemäßen Verfahren ein Lagerring auf einer Welle oder in einer Bohrung axial fixiert werden. Bei dem Lagerring kann es sich insbesondere um einen Ring eines Wälzlagers handeln.

Die axiale Anschlagfläche kann zum Ausgleich von Maßtoleranzen axial verschoben werden. Dies hat den Vorteil, dass das erfindungsgemäße Verfahren ohne zusätzlichen Aufwand auch in Fällen angewendet werden kann, bei denen nicht vernachlässigbare Maßtoleranzen vorliegen. Insbesondere ist auch in diesen Fällen keine aufwendige Justage und keine individuelle Auswahl oder Anfertigung von Bauteilen erforderlich. Ebenso wenig ist es erforderlich, die vorhandenen Maßabweichungen zu kennen oder zu ermitteln.

Die axiale Anschlagfläche kann mittels eines axial verschiebbaren Kolbens einer Spannvorrichtung gegen den Lagerring gepresst werden. Insbesondere kann die axiale Anschlagfläche ein Bestandteil des Kolbens sein.

Die Flüssigkeit kann in einen Hohlraum der Spannvorrichtung gefördert werden, der durch den Kolben verschlossen ist. Dabei kann der Kolben durch die Flüssigkeit aus dem Hohlraum gedrängt werden. Auf diese Weise kann die mechanische Umsetzung des erfindungsgemäßen Verfahrens mit relativ einfachen Mitteln auf zuverlässige Weise erfolgen.

Die Spannvorrichtung kann axial fixiert werden. Dadurch kann sichergestellt werden, dass der Druck in der Flüssigkeit ausschließlich in eine Bewegung des Kolbens umgesetzt wird und über den Kolben ein gewünschter Anpressdruck auf den Lagerring ausgeübt werden kann. Um ein unerwünschtes Verschieben der Spannvorrichtung zu verhindern, erfolgt die axiale Fixierung der Spannvorrichtung vorzugsweise vor dem Fördern der Flüssigkeit in den Hohlraum. Insbesondere kann die Spannvorrichtung an der Welle oder einer starr zur Bohrung angeordneten Komponente axial fixiert werden. Die axiale Fixierung kann beispielsweise mittels Befestigungsschrauben oder mittels eines Innen- bzw. eines Außengewindes der Spannvorrichtung erfolgen.

Die Flüssigkeit kann beispielsweise durch eine chemische Reaktion zum Erstarren gebracht werden.

Die Erfindung betrifft weiterhin eine Spannvorrichtung zum axialen Sichern eines Lagerrings. Die erfindungsgemäße Spannvorrichtung weist einen Kolben und eine axiale Anschlagfläche auf, die mit Hilfe des Kolbens axial verschiebbar ist und an den Lagerring axial anschlägt. Der Kolben ist durch eine erstarrte Flüssigkeit fixiert.

Insbesondere verschließt der Kolben einen Hohlraum, der mit der erstarrten Flüssigkeit gefüllt ist. Der Hohlraum kann als eine Druckkammer ausgebildet sein. Dies hat den Vorteil, dass mit der erfindungsgemäßen Spannvorrichtung eine hohe Vorspannung erzeugt werden kann.

Der Hohlraum kann über wenigstens eine Einfüllöffnung zugänglich sein, durch welche die Flüssigkeit vor dem Erstarren in den Hohlraum gefördert wird.

Die Anschlagfläche kann am Kolben ausgebildet sein. Der Kolben kann ringförmig ausgebildet sein. Das ermöglicht jeweils eine kompakte Ausführung der erfindungsgemäßen Spannvorrichtung. Insbesondere kann der Kolben auch in Umfangsrichtung segmentiert ausgebildet sein.

Der Lagerring kann auf einer Welle angeordnet sein. Weiterhin kann der Lagerring insbesondere als ein Ring eines Wälzlagers, wie beispielsweise eines zweireihigen Kegelrollenlagers ausgebildet sein.

Die erfindungsgemäße Spannvorrichtung kann als eine Komponente einer Windenergieanlage ausgebildet sein. Außerdem kann die Welle als eine Rotorwelle einer Windenergieanlage ausgebildet sein. Da bei einer Windenergieanlage Lagerringe mit großem Durchmesser axial zu fixieren sind, ist der Einsatz der erfindungsgemäßen Spannvorrichtung besonders vorteilhaft.

Die Erfindung bezieht sich weiterhin auf eine Anordnung mit einem Lagerring und der erfindungsgemäßen Spannvorrichtung.

Die Erfindung wird nachstehend anhand der in der Zeichnung dargestellten Ausführungsbeispiele erläutert.

Es zeigen
- Figur 1: ein Ausführungsbeispiel einer Lageranordnung mit einer erfindungsgemäßen axialen Sicherung in einer perspektivischen Darstellung,
- Figur 2: das in Figur 1 dargestellte Ausführungsbeispiel der Lageranordnung in Schnittdarstellung,
- Figur 3: das in Figur 1 dargestellte Ausführungsbeispiel der Lageranordnung während der Montage in Schnittdarstellung und
- Figur 4: ein weiteres Ausführungsbeispiel der Lageranordnung in Schnittdarstellung.

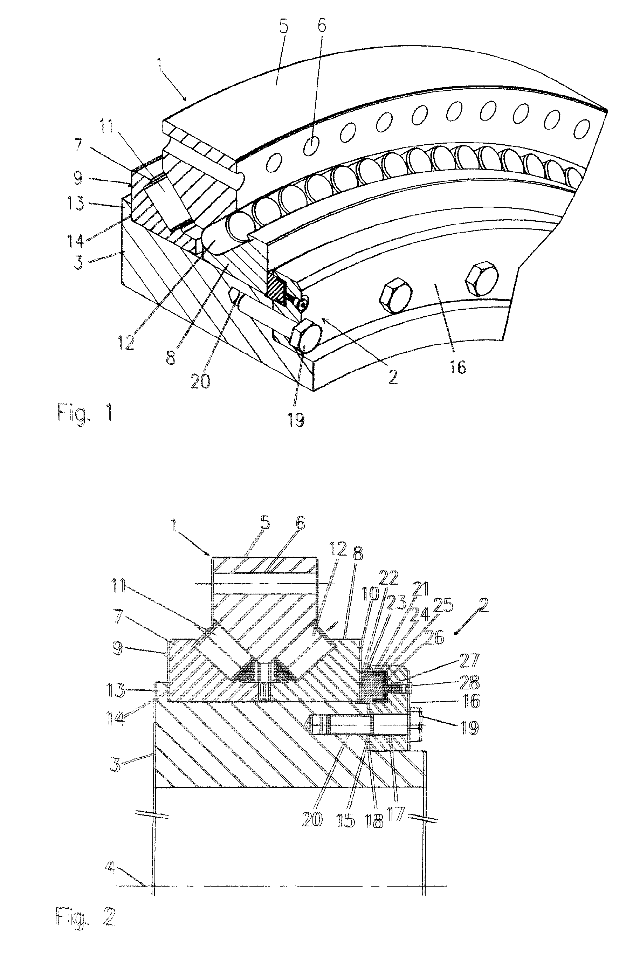

Figur 1 zeigt ein Ausführungsbeispiel einer Lageranordnung mit einer erfindungsgemäßen axialen Sicherung in einer perspektivischen Darstellung. Eine zugehörige Schnittdarstellung ist in Figur 2 ausgebildet.

Die Lageranordnung weist ein zweireihiges Kegelrollenlager 1 und eine Spannvorrichtung 2 auf, die das Kegelrollenlager 1 axial sichert und an einer Welle 3 fixiert. Die Welle 3 kann beispielsweise als eine Rotorwelle ausgebildet sein, die von einem nicht figürlich dargestellten Rotor einer Windenergieanlage angetrieben wird.

Das Kegelrollenlager 1 weist eine Rotationsachse 4 auf, die im dargestellten montierten Zustand auch gleichzeitig eine Achse der Spannvorrichtung 2 und eine Achse der Welle 3 ist. In einem demontierten Zustand können die Rotationsachse 4 des Kegelrollenlagers 1, die Achse der Spannvorrichtung 2 und die Achse der Welle 3 voneinander abweichen. Soweit im Folgenden nichts anderes angegeben ist, sind Richtungsangaben jeweils auf die Rotationsachse 4 des Kegelrollenlagers 1 bzw. auf die Achse der Spannvorrichtung 2 oder die Achse der Welle 3 bezogen. Eine für das Kegelrollenlager 1 oder eine seiner Komponente angegebene axiale Richtung ist somit eine Richtung parallel zur Rotationsachse 4 des Kegelrollenlagers 1. Bei der Spannvorrichtung 2 und der Welle 3 ist eine axiale Richtung jeweils eine Richtung parallel zur Achse der Spannvorrichtung 2 bzw. der Welle 3. Eine radiale Richtung ist eine Richtung senkrecht zur Rotationsachse 4 des Kegelrollenlagers 1 bzw. senkrecht zur Achse der Spannvorrichtung 2 oder der Welle 3.

Das Kegelrollenlager 1 weist einen Außenring 5 mit zwei axial nebeneinander angeordneten konischen Laufbahnen auf, die zusammen ein V-förmiges Profil ausbilden. Der Außenring 5 kann über einen Außendurchmesser von 1 Meter oder mehr verfügen und weist axiale Bohrungen 6 auf, mit deren Hilfe der Außenring 5 an einem nicht figürlich dargestellten Gehäuse befestigt werden kann. Weiterhin weist das Kegelrollenlager 1 zwei axial nebeneinander angeordnete Innenringe 7 und 8 mit je einer konischen Laufbahn auf. Der Innenring 7 weist eine äußere axiale Endfläche 9 und der Innenring 8 eine äußere axiale Endfläche 10 auf. Der Außenring 5 und die beiden Innenringe 7, 8 sind beim dargestellten Ausführungsbeispiel als in Umfangsrichtung geschlossene Ringe ausgebildet. Prinzipiell ist es auch möglich, segmentierte Ringe einzusetzen.

Auf der Laufbahn des Innenrings 7 und der benachbarten Laufbahn des Außenrings 5 rollen konisch ausgebildete Wälzkörper 11 ab. Auf der Laufbahn des Innenrings 8 und der benachbarten Laufbahn des Außenrings 5 rollen konisch ausgebildete Wälzkörper 12 ab. In der Darstellung der Figuren 1 und 2 ist das Kegelrollenlager 1 jeweils käfiglos ausgebildet. Ebenso ist es aber auch möglich, dass das Kegelrollenlager 1 für die Wälzkörper 11, 12 einen Käfig oder mehrere Käfige aufweist, die jeweils segmentiert oder in Umfangsrichtung geschlossen ausgebildet sein können. Insbesondere kann der Käfig mehrere Käfigsegmente aus Kunststoff aufweisen, die in Umfangsrichtung aneinandergereiht sein können, wie in der DE 102 46 825 A1 offenbart.

Die beiden Innenringe 7, 8 sind auf der Welle 3 angeordnet und drehfest mit der Welle 3 verbunden. Hierfür weist die Welle 3 eine Schulter 13 mit einer axialen Anschlagfläche 14 auf, an die der Innenring 7 mit seiner äußeren axialen Endfläche 9 axial anschlägt. Weiterhin weist die Welle 3 an ihrem zur Schulter 13 entgegengesetzten axialen Ende eine axiale Anschlagfläche 15 auf.

Die Spannvorrichtung 2 weist einen Klemmring 16 mit axialen Bohrungen 17 und einer axialen Anschlagfläche 18 auf, die im Bereich der axialen Bohrungen 17 ausgebildet ist und an die axiale Anschlagfläche 15 der Welle 3 anschlägt. Mittels Befestigungsschrauben 19, die durch die axialen Bohrungen 17 des Klemmrings 16 hindurchgeführt sind und in axiale Gewindebohrungen 20 der Welle 3 eingreifen, ist der Klemmring 16 fest mit der Welle 3 verschraubt.

Der Klemmring 16 weist auf seiner dem Innenring 8 zugewandten Seite eine ringförmig umlaufende Axialnut 21 auf. Die Axialnut 21 ist durch einen ringförmig ausgebildeten Kolben 22 verschlossen, der mit einer axialen Anschlagfläche 23 aus der Axialnut21 herausragt und an der äußeren axialen Endfläche 10 des Innenrings 8 anliegt. Mittels Dichtringen 24 ist der Kolben 22 gegen die Seitenwände der Axialnut 21 abgedichtet. Ein zwischen dem Kolben 22 und dem Boden der Axialnut 21 ausgebildeter Hohlraum 25 ist mit einer Flüssigkeit 26 gefüllt, die in der Darstellung der Figuren 1 und 2 in einem erstarrten Zustand vorliegt und den Kolben 22 in Axialrichtung relativ zum Klemmring 16 fixiert. Der Hohlraum 25 ist über eine axial verlaufende Einfüllöffnung 27 zugänglich, die durch eine Verschlussschraube 28 verschlossen ist.

Da der Klemmring 16 mit der Welle 3 fest verschraubt ist, ist das Kegelrollenlager 1 mit seinen Immenringen 7, 8 axial zwischen der axialen Anschlagfläche 14 der Schulter 13 und der axialen Anschlagfläche 23 des Kolbens 22 geklemmt. Durch die Klemmung wird eine axiale Kraft auf den Innenring 8 und über die Wälzkörper 11, 12 und den Außenring 5 auch auf den Innenring 7 ausgeübt. Da der Innenring 7 an der axialen Anschlagfläche 14 der Schulter 13 anschlägt, entsteht eine entsprechende axiale Gegenkraft. Durch diese Kräfte wird das Kegelrollenlager 1 axial vorgespannt. Außerdem werden die Innenringe 7, 8 axial und drehfest an der Welle 3 fixiert.

Die Montage des Kegelrollenlagers 1 auf der Welle 3 kann folgendermaßen erfolgen:
Zunächst wird das Kegelrollenlager 1 von der zur Schulter 13 axial entgegengesetzten Seite her axial auf die Welle 3 aufgeschoben, bis die äußere axiale Endfläche 9 des Innenrings 7 des Kegelrollenlagers 1 an die axiale Anschlagfläche 14 der Schulter 13 der Welle 3 anschlägt. Abhängig davon, ob eine radiale Überdeckung zwischen der Welle 3 und den Innenringen 7, 8 des Kegelrollenlagers 1 vorliegt, kann es erforderlich sein, dass das Kegelrollenlager 1 auf die Welle 3 aufgepresst wird und/oder die Innenringe 7, 8 erwärmt werden, um diese aufzuweiten bzw. die Welle 3 gekühlt wird.

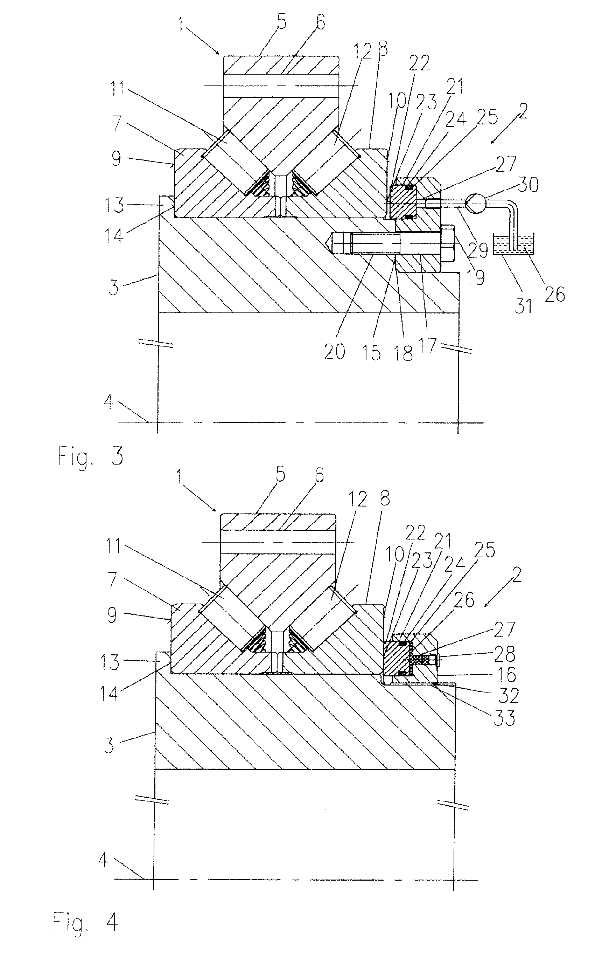

Wenn das Kegelrollenlager 1 seine Endposition auf der Welle 3 erreicht hat, wird die Spannvorrichtung 2 von der gleichen Seite her wie das Kegelrollenlager 1 axial auf die Welle 3 aufgeschoben, bis die axiale Anschlagfläche 18 des Klemmrings 16 der Spannvorrichtung 2 die axiale Anschlagfläche 15 der Welle 3 berührt. Diese Situation ist in Figur 3 dargestellt.

Figur 3 zeigt das in Figur 1 dargestellte Ausführungsbeispiel der Lageranordnung während der Montage in Schnittdarstellung.

Zum dargestellten Zeitpunkt ist der Hohlraum 25 der Spannvorrichtung 2 noch nicht mit der Flüssigkeit 26 gefüllt und der Kolben 22 liegt mit seiner axialen Anschlagfläche 23 nicht an der äußeren axialen Endfläche 10 des Innenrings 8 an. Abhängig von den Toleranzen des Kegelrollenlagers 1, der Welle 3 und der Spannvorrichtung 2 sowie von der anfänglichen Stellung des Kolbens 22 besteht aber auch die Möglichkeit, dass der Kolben 22 mit seiner axialen Anschlagfläche 23 bereits an der äußeren axialen Endfläche 10 des Innenrings 8 anliegt. Dies hat aber keinen Einfluss auf die Montage, da der Kolben 22 axial verschiebbar ist, solange der Hohlraum 25 der Spannvorrichtung 2 noch nicht mit der Flüssigkeit 26 gefüllt ist. Mit anderen Worten: Durch die axiale Verschiebbarkeit des Kolbens 22 werden axiale Maßtoleranzen des Kegelrollenlagers 1, der Welle 3 und der Spannvorrichtung 2 ausgeglichen. Dies wird im Folgenden noch näher erläutert.

Wie in Figur 3 bereits dargestellt, werden nach dem Aufschieben der Spannvorrichtung 2 auf die Welle 3 die Befestigungsschrauben 19 durch die axialen Bohrungen 17 des Klemmrings 16 in die axialen Gewindebohrungen 20 der Welle 3 eingeschraubt und festgezogen. Mit dem Einschrauben der Befestigungsschrauben 19 kann auch schon begonnen werden, bevor die axiale Anschlagfläche 18 des Klemmrings 16 der Spannvorrichtung 2 die axiale Anschlagfläche 15 der Welle 3 berührt.

An die Einfüllöffnung 27 der Klemmvorrichtung 2 wird eine Hydraulikleitung 29 angeschlossen, die über eine Pumpe 30 mit einem Reservoir 31 verbunden ist, in dem die Flüssigkeit 26 in flüssiger Form bevorratet wird. Diese Komponenten sind in Figur 3 ebenfalls dargestellt. Das Anschließen der Hydraulikleitung 29 kann auch bereits vor dem Aufschieben der Spannvorrichtung 2 auf die Welle 3 erfolgen.

Nach dem Festziehen der Befestigungsschrauben 19 wird die Flüssigkeit 26 mit der Pumpe 30 aus dem Reservoir 31 in den Hohlraum 25 der Spannvorrichtung 2 gefördert. Die Flüssigkeit 26 drängt den Kolben 22 aus dem Hohlraum 25, so dass der Kolben 22 axial verschoben wird, bis er mit seiner axialen Anschlagfläche 23 an der äußeren axialen Endfläche 10 des Innenrings 8 anliegt.

Die Eigenschaften der axialen Fixierung des Kegelrollenlagers 1 mit der Spannvorrichtung 2 hängen vom hydraulischen Druck ab, der mittels der Pumpe 30 nach dem Anschlagen des Kolbens 22 am Innenring 8 aufgebaut wird.

Wird lediglich ein sehr geringer hydraulischer Druck aufgebaut, kommt es zu keiner nennenswerten Krafteinwirkung des Kolbens 22 auf den Innenring 8. Dies hat zur Folge, dass das Kegelrollenlager 1 durch die Spannvorrichtung 2 ohne Vorspannung spielfrei axial fixiert ist.

Ebenso ist es aber auch möglich, mit der Spannvorrichtung 2 eine definierte Vorspannung des Kegelrollenlagers 1 einzustellen. Hierzu wird ein höherer hydraulischer Druck aufgebaut, als für die Beseitigung des axialen Lagerspiels erforderlich ist und demgemäß der Kolben 22 mit einer entsprechenden axialen Kraft gegen den Innenring 8 gepresst. Durch die daraus resultierende axiale Klemmung der Innenringe 7, 8 werden die Innenringe 7, 8 zudem drehfest mit der Welle 3 verbunden.

Um eine dauerhafte Konservierung der spielfreien oder vorgespannten axialen Fixierung des Kegelrollenlagers 1 zu erreichen, wird die Flüssigkeit 26 im Hohlraum 25 der Spannvorrichtung 2 zum Erstarren gebracht, d. h. von einem flüssigen in einen festen Zustand überführt. Dies kann beispielsweise durch eine chemische Reaktion geschehen, welche mit einer geringen zeitlichen Verzögerung nach dem Einfüllen der Flüssigkeit 26 in den Hohlraum 25 der Spannvorrichtung 2 abläuft. Die Zeitverzögerung wird dabei so gewählt, dass einerseits ausreichend Zeit für das Aufbauen des gewünschten hydraulischen Drucks bleibt und andererseits keine unnötig lange Wartezeit entsteht, durch welche die Montage einen unzulässig langen Zeitraum in Anspruch nehmen würde. Ebenso ist es auch möglich, die Erstarrung der Flüssigkeit 26 durch eine äußere Einwirkung auszulösen, beispielsweise durch Temperatur, Druck, Strahlung usw. Ein geeignetes Erstarrungsverhalten lässt sich beispielsweise mit Kunststoffmonomeren als Flüssigkeit 26 erzielen, denen kurz vor dem Einfüllen oder während des Einfüllens in den Hohlraum 25 ein Vernetzungsmittel zugefügt wird, das eine Polymerisation der Monomere zu einem Polymer bewirkt. Beispielsweise eignen sich flüssige Epoxidharze, denen ein Härter zugesetzt wird. Außerdem können auch Gießelastomere eingesetzt werden. Anstelle von Kunststoffen können auch andere Materialien wie beispielsweise Amalgam zum Einsatz kommen.

Idealerweise kommt es beim Erstarren der Flüssigkeit 26 nicht zu einer Volumenänderung bzw. ist die Volumenänderung so gering, dass die Vorspannung des Kegelrollenlagers 1 dadurch nicht unzulässig stark beeinflusst wird. Es ist aber auch möglich, eine etwaige Volumenänderung der Flüssigkeit 26 beim Erstarren bei der Vorgabe des aufzubauenden hydraulischen Drucks zu berücksichtigen. Außerdem kann einer Volumenänderung durch Fördern von Flüssigkeit 26 in den Hohlraum 25 oder aus dem Hohlraum 25 entgegen gewirkt werden, solange dies die Konsistenz der Flüssigkeit 26 noch zulässt. Einer Volumenvergrößerung kann außerdem durch einen Ausgleichshohlraum entgegen gewirkt werden, der mit dem Hohlraum 25 verbunden ist.

Nach dem Erstarren der Flüssigkeit 26 wird die Hydraulikleitung 29 von der Einfüllöffnung 27 entfernt und die Einfüllöffnung 27 wird mit der Verschlussschraube 28 verschlossen. Damit sind die Montage und die Fixierung des Kegelrollenlagers 1 abgeschlossen und es ist der in den Figuren 1 und 2 dargestellte Endzustand erreicht. Dieser Endzustand besteht beispielsweise darin, dass das Kegelrollenlager 1 drehfest mit der Welle 3 verbunden ist und eine axiale Vorspannung innerhalb eines gewünschten Bereichs aufweist.

Figur 4 zeigt ein weiteres Ausführungsbeispiel der Lageranordnung in Schnittdarstellung. Das in Figur 4 dargestellte Ausführungsbeispiel stimmt in weiten Teilen mit dem Ausführungsbeispiel der Figuren 1 bis 3 überein. Abweichend von den Figuren 1 bis 3 ist der Spannring 16 beim Ausführungsbeispiel der Figur 4 allerdings als eine Mutter mit einem Innengewinde 32 ausgeführt. Demgemäß weist die Welle 3 ein entsprechendes Außengewinde 33 auf, das in das Innengewinde 32 eingreift. Die in den Figuren 1 bis 3 dargestellten Befestigungsschrauben 19 und axialen Bohrungen 17 des Spannrings 16 sowie die axialen Gewindebohrungen 20 der Welle 3 entfallen.

Die Montage läuft in sinngemäß gleicher Weise ab, wie für das Ausführungsbeispiel der Figuren 1 bis 3 beschrieben, wobei der Spannring 16 auf die Welle 3 aufgeschraubt wird.

Bei einer nicht figürlich dargestellten weiteren Variante ist die Spannvorrichtung 2 als eine Ringscheibe ohne axiale Bohrungen 17 oder ein Innengewinde 32 zur Befestigung der Spannvorrichtung 2 an der Welle 3 ausgebildet. In diesem Fall stützt sich die Spannvorrichtung 2 auf ein geeignetes Widerlager, beispielsweise eine Wellenschulter, einen Flansch usw. ab.

Alle Ausführungsvarianten können zudem so abgewandelt werden, dass die Spannvorrichtung 2 nicht auf einer Welle 3 oder einem ähnlichen Maschinenteil sondern in einer Bohrung beispielsweise eines Gehäuses fixiert wird. In diesem Fall sind die axialen Bohrungen 17 des Spannrings 16 für die Befestigungsschrauben 19 radial außerhalb des Kolbens 22 angeordnet bzw. der Spannring 16 weist ein Außengewinde 33 statt des Innengewindes 32 auf.

### Bezugszeichenliste

- 1: Kegelrollenlager
- 2: Spannvorrichtung
- 3: Welle
- 4: Rotationsachse
- 5: Außenring
- 6: Axiale Bohrung
- 7: Innenring
- 8: Innenring
- 9: Äußere axiale Endfläche
- 10: Äußere axiale Endfläche
- 11: Wälzkörper
- 12: Wälzkörper
- 13: Schulter
- 14: Axiale Anschlagfläche
- 15: Axiale Anschlagfläche
- 16: Klemmring
- 17: Axiale Bohrung
- 18: Axiale Anschlagfläche
- 19: Befestigungsschraube
- 20: Axiale Gewindebohrung
- 21: Axialnut
- 22: Kolben
- 23: Axiale Anschlagfläche
- 24: Dichtring
- 25: Hohlraum
- 26: Flüssigkeit
- 27: Einfüllöffnung
- 28: Verschlussschraube
- 29: Hydraulikleitung
- 30: Pumpe
- 31: Reservoir
- 32: Innengewinde
- 33: Außengewinde

## Patentansprüche

1. Verfahren zum axialen Sichern eines Lagerrings (8), wobei eine axiale Anschlagfläche (23) mittels einer druckbeaufschlagten Flüssigkeit (26) axial gegen den Lagerring (8) gepresst wird und dadurch der Lagerring (8) in einer gewünschten axialen Position fixiert wird und/oder eine gewünschte axiale Vorspannung des Lagerrings (8) eingestellt wird, **dadurch gekennzeichnet, dass** die axiale Anschlagfläche (23) durch Erstarren der Flüssigkeit (26) fixiert wird und **dadurch** die eingestellte Position und/oder Vorspannung des Lagerrings (8) konserviert wird.

2. Verfahren nach Anspruch 1, **dadurch gekennzeichnet, dass** die axiale Anschlagfläche (23) zum Ausgleich von Maßtoleranzen axial verschoben wird.

3. Verfahren nach einem der vorhergehenden Ansprüche, **dadurch gekennzeichnet, dass** die axiale Anschlagfläche (23) mittels eines axial verschiebbaren Kolbens (22) einer Spannvorrichtung (2) gegen den Lagerring (8) gepresst wird.

4. Verfahren nach Anspruch 3, **dadurch gekennzeichnet, dass** die Flüssigkeit (26) in einen Hohlraum (25) der Spannvorrichtung (2) gefördert wird, der durch den Kolben (22) verschlossen ist.

5. Verfahren nach Anspruch 4, **dadurch gekennzeichnet, dass** der Kolben (22) durch die Flüssigkeit (26) aus dem Hohlraum (25) gedrängt wird.

6. Verfahren nach einem der vorhergehenden Ansprüche, **dadurch gekennzeichnet, dass** die Flüssigkeit (26) durch eine chemische Reaktion zum Erstarren gebracht wird.

7. Spannvorrichtung zum axialen Sichern eines Lagerrings (8), mit einem Kolben (22) und mit einer axialen Anschlagfläche (23), die mit Hilfe des Kolbens (22) axial verschiebbar ist und an den Lagerring (8) axial anschlägt, **dadurch gekennzeichnet, dass** der Kolben (22) durch eine erstarrte Flüssigkeit (26) fixiert ist.

8. Spannvorrichtung nach Anspruch 7, **dadurch gekennzeichnet, dass** der Kolben (22) einen Hohlraum (25) verschließt, der mit der erstarrten Flüssigkeit (26) gefüllt ist.

9. Spannvorrichtung nach Anspruch 8, **dadurch gekennzeichnet, dass** der Hohlraum (25) über wenigstens eine Einfüllöffnung (27) zugänglich ist, durch welche die Flüssigkeit (26) vor dem Erstarren in den Hohlraum (25) gefördert werden kann.

10. Spannvorrichtung nach einem der Ansprüche 7 bis 9, **dadurch gekennzeichnet, dass** die axiale Anschlagfläche (23) am Kolben (22) ausgebildet ist.

11. Spannvorrichtung nach einem der Ansprüche 7 bis 10, **dadurch gekennzeichnet, dass** der Kolben (22) ringförmig ausgebildet ist.

12. Spannvorrichtung nach einem der Ansprüche 7 bis 11, **dadurch gekennzeichnet, dass** der Lagerring (8) auf einer Welle (3) angeordnet ist.

13. Spannvorrichtung nach einem der Ansprüche 7 bis 12, **dadurch gekennzeichnet, dass** die Spannvorrichtung (2) als eine Komponente einer Windenergieanlage ausgebildet ist.

14. Anordnung mit einem Lagerring (8) und einer Spannvorrichtung (2) zum axialen Sichern des Lagerrings (8), **dadurch gekennzeichnet, dass** die Spannvorrichtung (2) nach einem der Ansprüche 7 bis 13 ausgebildet ist.

## Claims

1. Method for axially securing a bearing ring (8), wherein an axial abutment surface (23) is pressed axially against the bearing ring (8) by means of a pressurized liquid (26), and in this way the bearing ring (8) is fixed in a desired axial position and/or a desired axial preload of the bearing ring (8) is set, **characterized in that** the axial abutment surface (23) is fixed by solidification of the liquid (26), and in this way the set position and/or preload of the bearing ring (8) is conserved.

2. Method according to Claim 1, **characterized in that** the axial abutment surface (23) is displaced axially for the purposes of compensating dimensional tolerances.

3. Method according to one of the preceding claims, **characterized in that** the axial abutment surface (23) is pressed against the bearing ring (8) by means of an axially displaceable piston (22) of a clamping device (2).

4. Method according to Claim 3, **characterized in that** the liquid (26) is delivered into a cavity (25) of the clamping device (2), which cavity is closed off by the piston (22).

5. Method according to Claim 4, **characterized in that** the piston (22) is forced out of the cavity (25) by the liquid (26).

6. Method according to one of the preceding claims, **characterized in that** the liquid (26) is caused to solidify by way of a chemical reaction.

7. Clamping device for axially securing a bearing ring (8), having a piston (22) and having an axial abutment surface (23) which can be displaced axially by means of the piston (22) and which abuts axially against the bearing ring (8), **characterized in that** the piston (22) is fixed by way of a solidified liquid (26).

8. Clamping device according to Claim 7, **characterized in that** the piston (22) closes off a cavity (25) which is filled with the solidified liquid (26).

9. Clamping device according to Claim 8, **characterized in that** the cavity (25) is accessible via at least one filling opening (27) through which the liquid (26) can be delivered into the cavity (25) before solidification.

10. Clamping device according to one of Claims 7 to 9, **characterized in that** the axial abutment surface (23) is formed on the piston (22).

11. Clamping device according to one of Claims 7 to 10, **characterized in that** the piston (22) is of annular form.

12. Clamping device according to one of Claims 7 to 11, **characterized in that** the bearing ring (8) is arranged on a shaft (3).

13. Clamping device according to one of Claims 7 to 12, **characterized in that** the clamping device (2) is designed as a component of a wind turbine.

14. Arrangement having a bearing ring (8) and having a clamping device (2) for axially securing the bearing ring (8), **characterized in that** the clamping device (2) is designed according to one of Claims 7 to 13.

## Revendications

1. Procédé de sécurisation axiale d'une bague de palier (8), dans lequel on presse une face de butée axiale (23) axialement contre la bague de palier (8) au moyen d'un liquide mis sous pression (26) et on fixe ainsi la bague de palier (8) dans une position axiale désirée et/ou on règle une précontrainte axiale désirée de la bague de palier (8), **caractérisé en ce que** l'on fixe la face de butée axiale (23) par solidification du liquide (26) et on conserve ainsi la position et/ou la précontrainte réglée de la bague de palier (8).

2. Procédé selon la revendication 1, **caractérisé en ce que** l'on déplace axialement la face de butée axiale (23) pour compenser des tolérances dimensionnelles.

3. Procédé selon l'une quelconque des revendications précédentes, **caractérisé en ce que** l'on presse la face de butée axiale (23) contre la bague de palier (8) au moyen d'un piston déplaçable axialement (22) d'un dispositif de serrage (2).

4. Procédé selon la revendication 3, **caractérisé en ce que** l'on transporte le liquide (26) dans une cavité (25) du dispositif de serrage (2), qui est fermée par le piston (22).

5. Procédé selon la revendication 4, **caractérisé en ce que** l'on pousse le piston (22) hors de la cavité (25) au moyen du liquide (26).

6. Procédé selon l'une quelconque des revendications précédentes, **caractérisé en ce que** l'on provoque la solidification du liquide (26) par une réaction chimique.

7. Dispositif de serrage pour la sécurisation axiale d'une bague de palier (8) avec un piston (22) et avec une face de butée axiale (23), qui est déplaçable axialement à l'aide du piston (22) et qui bute axialement contre la bague de palier (8), **caractérisé en ce que** le piston (22) est fixé par un liquide solidifié (26).

8. Dispositif de serrage selon la revendication 7, **caractérisé en ce que** le piston (22) ferme une cavité (25), qui est remplie avec le liquide solidifié (26).

9. Dispositif de serrage selon la revendication 8, **caractérisé en ce que** la cavité (25) est accessible par au moins une ouverture de remplissage (27), par laquelle le liquide (26) peut être transporté dans la cavité (25) avant la solidification.

10. Dispositif de serrage selon l'une quelconque des revendications 7 à 9, **caractérisé en ce que** la face de butée axiale (23) est formée sur le piston (22).

11. Dispositif de serrage selon l'une quelconque des revendications 7 à 10, **caractérisé en ce que** le piston (22) est réalisé sous forme annulaire.

12. Dispositif de serrage selon l'une quelconque des revendications 7 à 11, **caractérisé en ce que** la bague de palier (8) est disposée sur un arbre (3).

13. Dispositif de serrage selon l'une quelconque des revendications 7 à 12, **caractérisé en ce que** le dispositif de serrage (2) est réalisé sous forme de composant d'une installation d'énergie éolienne.

14. Dispositif avec une bague de palier (8) et un dispositif de serrage (2) pour la sécurisation axiale de la bague de palier (8), **caractérisé en ce que** le dispositif de serrage (2) est réalisé selon l'une quelconque des revendications 7 à 13.
